# FASCICULE DE BREVET EUROPEEN

(11) **EP 1 514 763 B1**
(45) Date de publication et mention de la délivrance du brevet: **22.11.2006**
(21) Numéro de dépôt: 04292134.6
(22) Date de dépôt: 03.09.2004
(51) Int. Cl.: B62D 1/18

(54) **Module de colonne de direction a capteur unique de deplacement**
Lenksäulenmodul mit einzigem Wegsensor
Steering column module having a single displacement sensor

(30) Priorité: 09.09.2003 FR 0310602
(43) Date de publication de la demande: 16.03.2005
(73) Titulaire: Nacam France SAS, 41100 Vendome (FR)
(72) Inventeur: Barcat, Florian, 37000 Tours (FR)
(74) Mandataire: Breese, Pierre

(56) Documents cités:
- EP-A- 0 461 025
- WO-A-01/81149
- WO-A-03/022657
- DE-A- 3 311 229
- DE-A- 4 217 664

## Description

La présente invention concerne le domaine des colonnes de direction destinées à des véhicules automobiles, et plus particulièrement des modules comprenant une colonne de direction et des moyens motorisés pour la commande de l'inclinaison et de la profondeur du volant. Une colonne de direction à réglage électrique permet le réglage de la position du volant selon deux axes :
- le réglage axial pour rapprocher ou en éloigner le volant du conducteur.
- le réglage radial pour régler la position du volant de haut en bas, ou, notamment pour les véhicules destinés au marché américain, pour régler l'inclinaison du volant entre une position plutôt horizontale et une position plutôt verticale.

Il est connu dans l'état de la technique de réduire le poids et le coût de tels modules par l'utilisation d'un moteur unique assurant à la fois le réglage axial et le réglage longitudinal. Un ou plusieurs mécanismes embrayables assurent la transmission entre un ou plusieurs axes de sortie du moteur unique, pour activer ou désactiver l'entraînement des parties mobiles assurant l'orientation du volant.

Le document WO 03022567 concerne une unité de colonne de direction de véhicule automobile comprenant une colonne de direction de longueur et/ou inclinaison réglable par voie électromécanique. L'invention a pour objet de concevoir une unité de ce type qui peut être facilement adaptée à différents types de véhicules, qui peut être reconfigurée de manière variable vis-à-vis de sa fonctionnalité, dès le processus de fabrication, et qui est clairement délimitée des autres unités structurelles du véhicule automobile. A cet effet, l'unité de colonne de direction de véhicule automobile de l'invention comprend, en plus des éléments mécaniques et organes de réglage, nécessaires à la commande de direction et à la modification électrique de la position de la colonne de direction, au moins un système d'entraînement, une unité de commande électronique pour produire des signaux de commande destinés au(x) système(s) d'entraînement et aux organes électriques de réglage, ainsi que des connexions destinées à relier l'unité au réseau de bord.

A titre d'exemple, le brevet allemand DE19641152 décrit une unité de colonne de direction pour véhicule automobile comportant un boîtier de colonne de direction et un dispositif de réglage actionné électriquement, servant à réaliser le réglage longitudinal et le réglage d'inclinaison de la colonne de direction. Le dispositif de réglage porte une unité d'entraînement électrique pour entraîner en rotation une broche de réglage et pour déplacer longitudinalement et incliner au moins respectivement un mécanisme de réglage. Pour chaque direction de déplacement, un dispositif de commutation assure l'embrayage ou le débrayage d'un écrou de broche disposé au voisinage de ce dispositif.

Le brevet européen EP0461025 décrit un dispositif motorisé de commande de réglage de la position d'une colonne de direction réglable en profondeur et inclinaison où la colonne de direction comprend un arbre fait d'un tronçon d'extrémité destiné à porter un volant et d'un tronçon intercalaire extensible ou rétractable constitué de deux parties assemblées par une jonction coulissante, des cardans de liaison réunissant ces tronçons. Ce dispositif de l'art antérieur comprend un corps fixe relié au véhicule et un corps mobile constitué d'un élément coulissant relativement au corps fixe et d'un élément basculant relativement à l'élément coulissant à l'aide d'une articulation d'axe (Y) orthogonal à l'axe (X) de la colonne, ainsi que des paliers supportant l'arbre dans le corps mobile. Une transmission associée à un moteur unique présente une entrée reliée au moteur et deux sorties de manière que l'une des sorties provoque la translation et l'autre sortie provoque l'inclinaison. Les deux sorties sont activées à des vitesses relatives appairées pour assurer le réglage en profondeur des deux éléments du corps mobile et des tronçons d'arbre qu'ils portent. Une seule des sorties est activée pour assurer le réglage en inclinaison de l'élément basculant et du tronçon d'arbre qu'il porte. Le corps fixe et le corps mobile constituent une gaine, le corps mobile coulissant dans le corps fixe dans le sens axial.

Ces différents documents de l'art antérieur proposent des solutions au problème de la motorisation par un moteur unique des réglages de la colonne de direction. Pour qu'un tel module soit pleinement utilisable, il est souhaitable de pouvoir mémoriser une position axiale et longitudinale convenant à un conducteur du véhicule, et de pouvoir restituer cette position lorsque ce conducteur le souhaite.

A cet effet le document WO03022657 de la société NACAM GmbH propose une unité de colonne de direction comprenant en plus des éléments mécaniques et organes de réglage, nécessaires à la commande de direction et à la modification électrique de la position de la colonne de direction, au moins un système d'entraînement, une unité de commande électronique pour produire des signaux de commande destinés au(x) système(s) d'entraînement et aux organes électriques de réglage, ainsi que des connexions destinées à relier l'unité au réseau de bord.

Cette solution implique une électronique de commande coûteuse, et met en oeuvre des capteurs de position qu'il convient d'intégrer dans les mécanismes respectifs de réglages longitudinal et axial.

On connaît encore le brevet allemand DE3311229 décrivant un dispositif de réglage utilisant un moteur pas à pas de type « brushless » commandé par des trains d'impulsions. Une telle solution n'est pas satisfaisante car en cas de déréglage mécanique du mécanisme d'entraînement, par exemple en raison de l'usure ou d'un dépassement de fin de course, la commande de positionnement est erronée.

On connaît également le brevet allemand DE4217664 qui décrit un module de colonne de direction à commande de positionnement motorisée comportant un moteur unique de réglage de la position du volant selon un axe de pivotement transversal pour le réglage de l'inclinaison du volant d'une part, et selon un axe longitudinal pour le réglage de la profondeur d'autre part, ledit moteur entraînant, par l'intermédiaire d'un premier élément de jonction fileté, le déplacement axial en translation de la colonne de direction par rapport à la partie fixe du module, et, par l'intermédiaire d'un second élément de jonction fileté, la rotation de la colonne de direction par rapport à un axe de pivotement transversal de la colonne de direction par rapport à la partie fixe du module, chacun desdits éléments de jonction coopérant avec une vis filetée unique entraînée par ledit moteur unique, le module comportant des moyens de commande de l'embrayage des éléments de jonction avec ladite vis filetée, ledit moteur unique entraînant un capteur de position incrémental unique délivrant un signal de position à un contrôleur et ledit contrôleur recevant en outre des informations représentatives de l'état desdits embrayages. Le contrôleur comprend un premier compteur de mémoire incrémenté en fonction des variations du capteur incrémental lorsque l'embrayage du premier élément de jonction est activé et un deuxième compteur de mémoire incrémenté en fonction du capteur incrémental lorsque l'embrayage du deuxième élément de jonction est activé.

Le but de la présente invention est de proposer une solution simplifiée d'acquisition des réglages et de commande de la mémorisation et de la restitution d'un réglage sélectionné par un conducteur.

A cet effet, l'invention concerne selon son acception la plus générale un module de colonne de direction à commande de positionnement motorisée comportant un moteur unique de réglage de la position du volant selon un axe de pivotement transversal pour le réglage de l'inclinaison du volant d'une part, et selon un axe longitudinal pour le réglage de la profondeur d'autre part, par l'intermédiaire respectivement d'un premier et d'un second éléments de jonction, ledit module comportant des moyens de commande de l'état des éléments de jonction permettant de sélectionner un des axes de réglage, ledit moteur unique étant associé à un capteur de position incrémental unique délivrant une information de rotation dudit moteur à un contrôleur qui reçoit en outre au moins une information d'activation représentative de l'état de l'un au moins desdits éléments de jonction, ledit contrôleur comportant un système de comptage des impulsions délivrées par ledit capteur, ledit système de comptage comprenant un premier et un second compteurs sélectionnés en fonction de ladite au moins une information d'activation et correspondant respectivement à l'un et l'autre desdits axes de réglage, caractérisé en ce que ledit module comporte des détecteurs de position desdits éléments de jonction, lesdits détecteurs étant adaptés à délivrer un signal de réinitialisation des compteurs lorsque les éléments de jonction viennent dans des positions de référence.

Ce capteur incrémental unique peut être soit directement sur le moteur, soit sur un élément quelconque de la transmission, soit même sur l'axe de sortie.

Cet état pourra être "embrayé" ou "débrayé" lorsque l'élément de jonction comporte un embrayage, ou "actif" ou "inactif" lorsqu'il s'agit d'un moteur à deux axes de sortie dont l'un ou l'autre est entraîné. L'information relative à l'état des éléments de jonction vient du circuit de commande qui contrôle le fonctionnement du mécanisme de réglage.

Un avantage de ce système est de n'avoir qu'un seul capteur relatif nécessaire pour toutes les fonctions de positionnement de la colonne selon les deux axes. Ce capteur est en outre facilement intégrable dans le moteur ou sur un élément de la transmission qui actionne le réglage, diminuant ainsi le nombre de composants nécessaires sur la colonne et simplifiant aussi le câblage nécessaire.

Selon une première variante, l'un des éléments de jonction entraîne le déplacement axial en translation de la colonne de direction par rapport à la partie fixe du module, et l'autre élément de jonction entraîne la rotation de la colonne de direction par rapport à un axe de pivotement transversal de la colonne de direction par rapport à la partie fixe du module, chacun desdits éléments de jonction coopérant avec une vis filetée unique entraînée par ledit moteur unique, le module comportant des moyens de commande de l'embrayage de l'un au moins des éléments de jonction avec ladite vis filetée, lesdits moyens de commande délivrant ladite information d'activation correspondant à l'état desdits embrayages.

Selon une deuxième variante, l'un des éléments de jonction est en prise permanente avec ladite vis entraînée par le moteur unique. Le contrôleur comporte un premier registre de mémoire incrémenté en fonction des variations du capteur incrémental seulement lorsque l'embrayage du premier moyen de jonction est activé, et un deuxième registre de mémoire incrémenté en fonction des variations dudit capteur incrémental en permanence.

Selon un mode de réalisation adapté pour commander principalement l'inclinaison du volant, ledit pivot est situé du côté de la colonne de direction et de la partie fixe la plus proche du volant.

Selon un mode de réalisation adapté pour commander principalement la hauteur du volant, ledit pivot est situé du côté de la colonne de direction et de la partie fixe la plus éloignée du volant.

Quelle que soit la variante susvisée, le module comporte avantageusement des détecteurs de la position des éléments de jonction par rapport à une position de référence, délivrant un signal de réinitialisation desdits registres de mémoire. Ces détecteurs peuvent être par exemple des micro-switchs, un détecteur optique, magnétique, inductif ou capacitif, etc...

Selon une variante, chacun des éléments de jonction est couplé par l'intermédiaire d'un embrayage avec ladite vis entraînée par le moteur unique et en ce que le contrôleur comporte un premier registre de mémoire incrémenté en fonction des variations du capteur incrémental lorsque l'embrayage du premier moyen de jonction est activé, et un deuxième registre de mémoire incrémenté en fonction des variations dudit capteur incrémental lorsque l'embrayage du deuxième moyen de jonction est activé.

Selon une autre variante, le module comporte des détecteurs de la position des éléments de jonction par rapport à une position de référence, chacun desdits capteurs délivrant un signal de réinitialisation de l'un desdits registres de mémoire.

Selon un mode de réalisation particulier, le moteur unique comporte deux axes de sorties et un moyen de commutation assurant la sélection de l'une ou de l'autre des dits axes ou des deux axes simultanément.

L'un des éléments de jonction coopère par une liaison vis-écrou avec l'un des axes de sortie pour entraîner le déplacement axial en translation de la colonne de direction par rapport à la partie fixe du module, et l'autre des éléments de jonction coopérant par une liaison vis-écrou avec l'autre axe de sortie pour entraîner la rotation de la colonne de direction par rapport à un axe de pivotement transversal de la colonne de direction par rapport à la partie fixe du module, le module comportant des moyens de commutation délivrant ladite information d'activation correspondant à l'état desdits axes de sortie.

Le contrôleur comporte un premier registre incrémenté par les impulsions délivrées par ledit capteur incrémental entraîné par le moteur unique lorsqu'un réglage axial est sélectionné, et un deuxième registre incrémenté par les impulsions délivrées par ledit capteur incrémental entraîné par le moteur unique lorsqu'un réglage en inclinaison est sélectionné.

Le premier registre est réinitialisé par un signal délivré par un premier détecteur lorsque l'élément de jonction axial est dans une position de référence, et un deuxième registre est réinitialisé par un signal délivré par un deuxième détecteur lorsque l'élément de jonction radial est dans une position de référence.

Selon une variante, le contrôleur comporte un premier registre incrémenté par les impulsions délivrées par ledit capteur incrémental entraîné par le moteur unique lorsqu'un réglage selon l'un des modes de réglage est sélectionné, et un deuxième registre incrémenté par les impulsions délivrées par ledit capteur incrémental entraîné par le moteur unique.

Lesdits registres sont réinitialisés par deux signaux délivrés par des détecteurs lorsque les deux éléments de jonction sont chacun en position de référence. Ces détecteurs peuvent être par exemple des micro-switchs, un détecteur optique, magnétique, inductif ou capacitif, etc...

L'invention sera mieux comprise à la lecture de la description qui suit, se référant aux dessins annexés correspondant à des exemples non limitatifs de réalisation, où :
la figure 1 représente une vue schématique d'un exemple de module comportant des réglages axial et radial indépendants, avec un moteur et deux embrayages
la figure 2 représente une vue schématique du contrôleur du module.
la figure 3 représente une vue schématique d'un exemple de module comportant des réglages axial et radial indépendants, avec un moteur à deux axes de sortie dont un seul est en rotation à la fois
la figure 4 représente une vue schématique d'un deuxième exemple de module comportant des réglages axial et radial indépendant, avec un moteur mobile, un embrayage fixe et un écrou permanent
la figure 5 représente une vue schématique d'un exemple de module comportant des réglages axial et radial interdépendant avec un moteur, un embrayage et un écrou permanent
la figure 6 représente une vue schématique d'un deuxième exemple de module comportant des réglages axial et radial interdépendant avec un moteur à deux axes de sortie (soit seul l'axe 1 tourne pour le réglage radial, soit les deux tournent à la même vitesse pour le réglage axial).

L'invention peut être mise en oeuvre sous différentes formes de réalisation, ayant comme caractéristique commune de motorisation par un moteur unique, avec un capteur incrémental unique sur le moteur ou un élément de la transmission. Le contrôle du réglage de position d'une colonne monomoteur fait appel à un seul capteur relatif cyclique par exemple une sonde à effet Hall, ou un capteur optique ou magnétique qui délivre une information de rotation du moteur qui entraîne la ou les vis de sortie sur laquelle ou lesquelles se déplacent les jonctions qui assurent le réglage axial ou angulaire.

Selon la transmission connectée au moteur et l'implantation du capteur relatif dans le système, le nombre de cycles donnés par ce capteur par tour moteur est variable d'une colonne à l'autre, et ce rapport de transmission doit être pris en compte dans la description ci-dessous.

Le contrôleur comporte un système de comptage des impulsions délivrées par ce capteur. Ces impulsions sont comptées dans un sens de rotation du moteur, décomptées dans l'autre sens de rotation. Selon l'axe de réglage sélectionné, ces impulsions sont à considérer soit pour la mesure de déplacement axial, soit pour la mesure de déplacement radial.

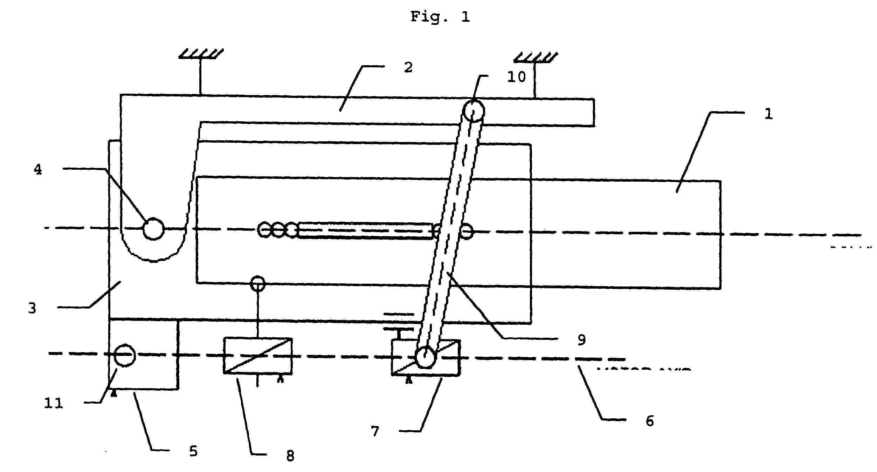

La figure 1 représente une vue schématique d'un exemple de module comportant des réglages axial et radial indépendants, avec un moteur et deux embrayages.

Le module décrit en référence à la figure 1 comporte une colonne de direction (1) mobile selon deux axes par rapport à une partie fixe (2) destinée à assurer la liaison du module avec l'habitacle du véhicule automobile.

La colonne de direction (1) est mobile en translation par rapport à un fourreau (3) solidaire de la partie fixe (2). Ce fourreau (3) est mobile en rotation autour d'un axe transversal (4) perpendiculaire au plan vertical passant par l'axe de la colonne de direction (1). Cet axe (4) est disposé du côté opposé à l'extrémité de la colonne sur laquelle est monté le volant. Le basculement du fourreau (3) par rapport à cet axe (4) assure le réglage en hauteur du volant, et une légère modification de l'inclinaison du volant.

Le module comporte un moteur unique (5) entraînant une vis sans fin (6) parallèle à l'axe longitudinal de la colonne de direction (1).

Sur cette vis sans fin (6) sont montés deux éléments de jonction (7, 8).

Le premier élément de jonction (7) assure le mouvement de basculement du fourreau (3) par rapport à la partie fixe (2). Il comprend à cet effet une bielle (9) dont une extrémité est articulée sur l'élément de jonction (7) et l'autre extrémité est articulée par rapport à un axe de liaison avec la partie fixe (2).

Le déplacement du premier élément de jonction (7) le long de la vis sans fin (6) modifie l'angle formé par cette bielle (9) avec l'axe longitudinal, et donc l'écartement transversal du point de liaison (10) avec l'axe de la colonne de direction (1), et par conséquent l'angle que forme l'axe de la colonne de direction (1) avec la partie fixe (2), ainsi que la position en hauteur du volant.

Le déplacement du premier élément de jonction (7) assure le déplacement angulaire de la colonne de direction (1), pour le réglage de hauteur du volant. Il n'est pas entraîné en permanence par la vis (6), mais coopère avec celle-ci par l'intermédiaire d'un embrayage. Lorsque l'élément de jonction (7) est en état embrayé, il assure le réglage angulaire de la colonne de direction (1) : chaque fois que le moteur tourne dans un sens ou dans l'autre, l'élément de jonction (7) est déplacé en translation dans un sens ou dans l'autre, et la position angulaire de la colonne de direction (1) est modifiée par rapport à la partie fixe (2). Lorsque l'élément de jonction (7) est en état débrayé, cet élément de jonction ne se déplace pas même si la vis (6) est en rotation.

Le déplacement du deuxième élément de jonction (8) assure le déplacement axial de la colonne de direction (1), pour le réglage en profondeur du volant. Il n'est pas entraîné en permanence par la vis (6), mais coopère avec celle-ci par l'intermédiaire d'un embrayage. Lorsque l'élément de jonction (8) est en état embrayé, il assure le réglage axial de la colonne de direction (1) : chaque fois que le moteur tourne dans un sens ou dans l'autre, l'élément de jonction (8) est déplacé en translation dans un sens ou dans l'autre, et la position axiale de la colonne de direction (1) est modifiée. Lorsque l'élément de jonction (8) est en état débrayé, cet élément de jonction ne se déplace pas même si la vis (6) est en rotation.

Le moteur (5) est accouplé directement ou indirectement à un capteur relatif à sonde de Hall délivrant une impulsion à chaque pas de rotation.

Dans l'exemple de réalisation décrit en figure 1, le contrôleur comprend deux compteurs. Un premier compteur reçoit les impulsions provenant du capteur relatif, et est incrémenté ou décrémenté en fonction du signal de sens de rotation chaque fois que le moteur entraîne la vis (6) et que le second élément de jonction (8) est embrayé. L'état de ce premier compteur correspond à la position axiale de la colonne de direction.

Le deuxième compteur reçoit également les impulsions provenant du capteur relatif, et est incrémenté ou décrémenté en fonction du signal de sens de rotation chaque fois que le moteur entraîne la vis (6) et que le premier élément de jonction (7) est dans l'état embrayé. L'état de ce deuxième compteur correspond à la position angulaire de la colonne de direction.

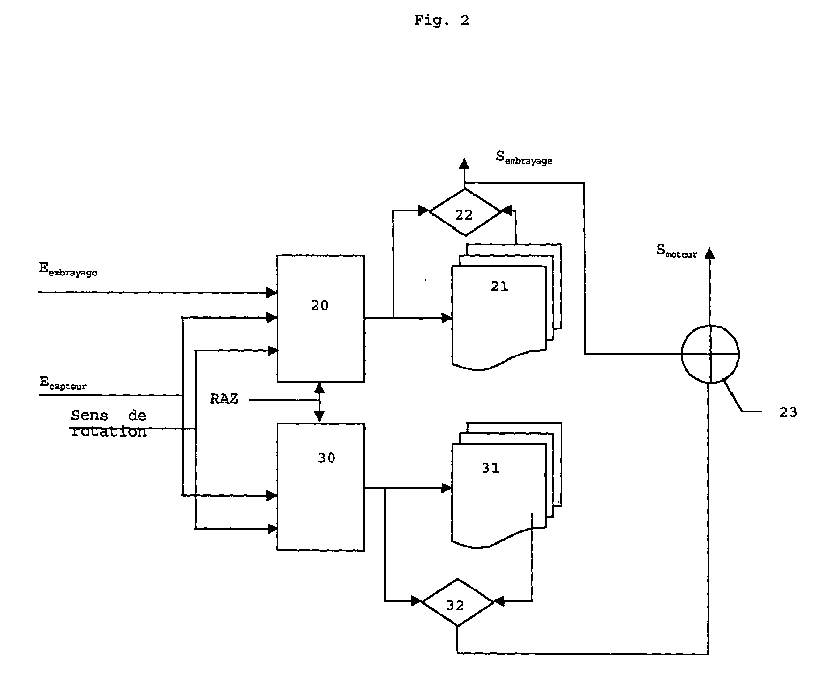

La figure 2 représente une vue schématique d'un contrôleur. Il comprend un premier compteur (20) de position axiale recevant :
- sur une première entrée un signal correspondant à l'état de l'embrayage du deuxième élément de jonction (8). Cette information provient du circuit de commande logique.
- sur une deuxième entrée les impulsions provenant du capteur relatif
- sur une troisième entrée un signal correspondant au sens de rotation du moteur. Cette information provient du circuit de commande logique.
- sur une quatrième entrée un signal de réinitialisation.

Ce compteur (20) est incrémenté à chaque impulsion reçue sur la deuxième entrée, lorsque la première entrée reçoit un signal correspondant à l'état embrayé, et lorsque la troisième entrée reçoit un signal correspondant à un premier sens de rotation.

Ce compteur (20) est décrémenté à chaque impulsion reçue sur la deuxième entrée, lorsque la première entrée reçoit un signal correspondant à l'état embrayé, et lorsque la troisième entrée reçoit un signal correspondant à un sens de rotation inverse.

Ce compteur (20) est maintenu dans son état antérieur dans les autres cas.

Le contrôleur comprend un deuxième compteur (30) de position radiale qui reçoit :
- sur une première entrée un signal correspondant à l'état de l'embrayage du premier élément de jonction (7). Cette information provient du circuit de commande logique.
- sur une deuxième entrée les impulsions provenant du capteur relatif
- sur une troisième entrée un signal correspondant au sens de rotation du moteur
- sur une quatrième entrée un signal de réinitialisation.

Ce compteur (30) est incrémenté à chaque impulsion reçue sur la deuxième entrée, lorsque la première entrée reçoit un signal correspondant à l'état embrayé, et lorsque la troisième entrée reçoit un signal correspondant à un premier sens de rotation.

Ce compteur (30) est décrémenté à chaque impulsion reçue sur la deuxième entrée, lorsque la première entrée reçoit un signal correspondant à l'état embrayé, et lorsque la troisième entrée reçoit un signal correspondant à un sens de rotation inverse.

Ce compteur (30) est maintenu dans son état antérieur dans les autres cas.

Le circuit comporte en outre, pour chacun des deux compteurs, comme variante une entrée recevant l'information correspondant à l'axe de sortie moteur sélectionné (à la place des entrées de chacun des entrées recevant un signal correspondant à l'état de l'embrayage).

Enfin, lorsque les deux éléments de jonction viennent dans une position de référence où sont placés des détecteurs de position, un signal de remise à zéro réinitialise les compteurs (20, 30). Les deux remises à zéro ne sont pas simultanées.

Chacun des compteurs (20, 30) est relié à un registre de mémoire (21, 31) pour l'enregistrement de couples de positions par un conducteur. Ces couples de positions permettent au conducteur qui les a enregistrés de retrouver sa position favorite. La restitution d'une position pré-enregistrée s'effectue à l'aide de deux comparateurs (22, 32), le premier commandant l'embrayage du second élément de jonction (8) lorsque la position axiale mesurée par le premier compteur (20) correspond à la position préenregistrée dans le premier registre (21), et le deuxième comparateur commandant l'embrayage du premier élément de jonction (7) lorsque la position radiale mesurée par le second compteur (30) correspond à la position préenregistrée dans le second registre (31).

Le traitement des informations par le calculateur peut donner lieu à diverses variantes.

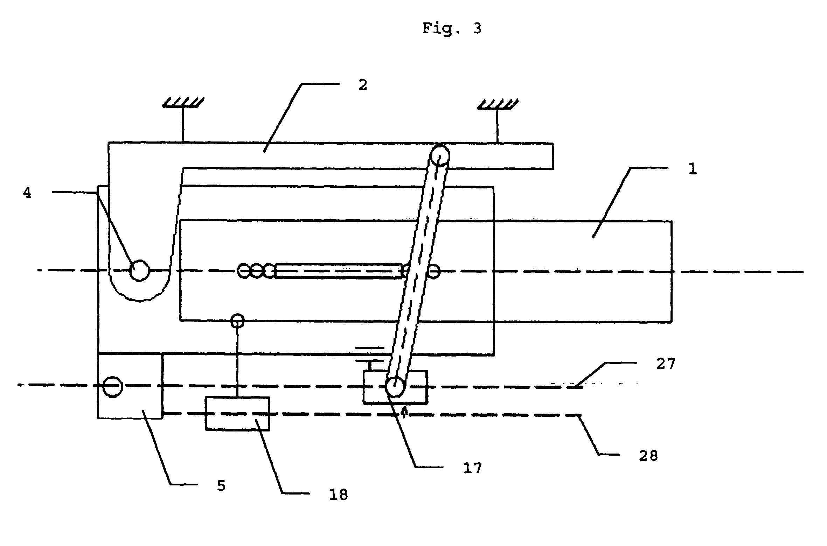

La figure 3 représente une vue schématique d'un exemple de module comportant des réglages axial et radial indépendants, avec un moteur à deux axes de sortie dont un seul est en rotation à la fois.

Il s'agit d'une variante de réalisation de la solution précédente. Le moteur (5) entraîne deux vis (27, 28) par l'intermédiaire d'un mécanisme de commutation assurant l'entraînement de la vis (27) ou (exclusif) de la vis (28). Le moteur (5) est accouplé directement ou indirectement à un capteur relatif unique délivrant un signal transmis au contrôleur. Le compteur de position radiale est incrémenté ou décrémenté selon le sens de rotation du moteur (5) lorsque la vis (27) entraînant l'élément de jonction (17) est active.

Lorsque la vis (28) entraînant l'élément de jonction (18) est active, c'est le compteur de position axiale qui est incrémenté ou décrémenté selon le sens de rotation du moteur (5). Par ailleurs, des détecteurs de position de référence délivrent un signal de réinitialisation des compteurs.

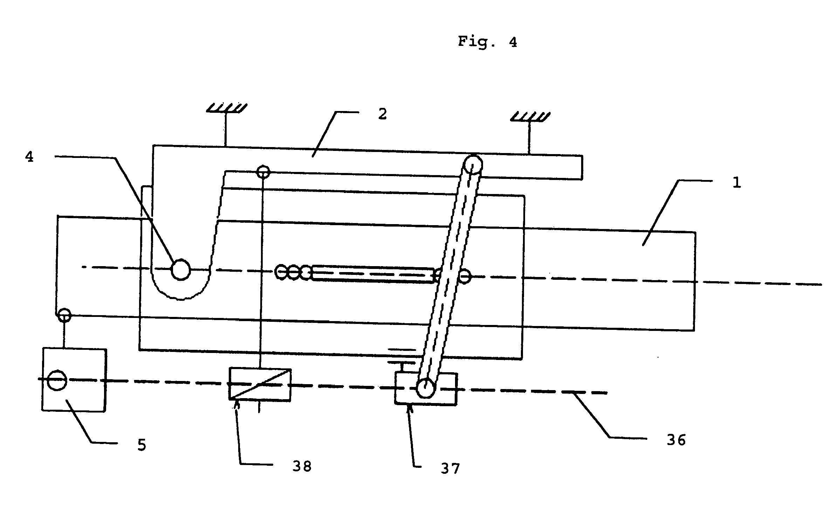

La figure 4 représente une vue schématique d'un deuxième exemple de module comportant des réglages axial et radial indépendant, avec un moteur mobile, un embrayage fixe et un écrou permanent. Dans cet exemple de mise en oeuvre, le moteur unique (5) n'est pas fixe par rapport à l'habitacle, mais solidaire de la colonne mobile (1) avec laquelle il se déplace.

Le moteur (5) entraîne une vis (36) parallèle à la colonne de direction (1) entraînant par une liaison vis-écrou permanente un premier élément de jonction (37) actionnant une bielle dont l'extrémité opposée est liée à la partie fixe (2) par une articulation transversale. Il assure le réglage en pivotement du volant.

Cette vis (36) entraîne également par une liaison vis-écrou débrayable un deuxième élément de jonction (38) lié à la partie fixe (2). Il assure le réglage de profondeur du volant. De la même façon, un capteur relatif unique est accouplé directement ou indirectement au moteur et délivre des impulsions à deux compteurs dont l'un incrémenté et décrémenté à chaque rotation du moteur, et l'autre lorsque le deuxième élément de jonction (38) est embrayé.

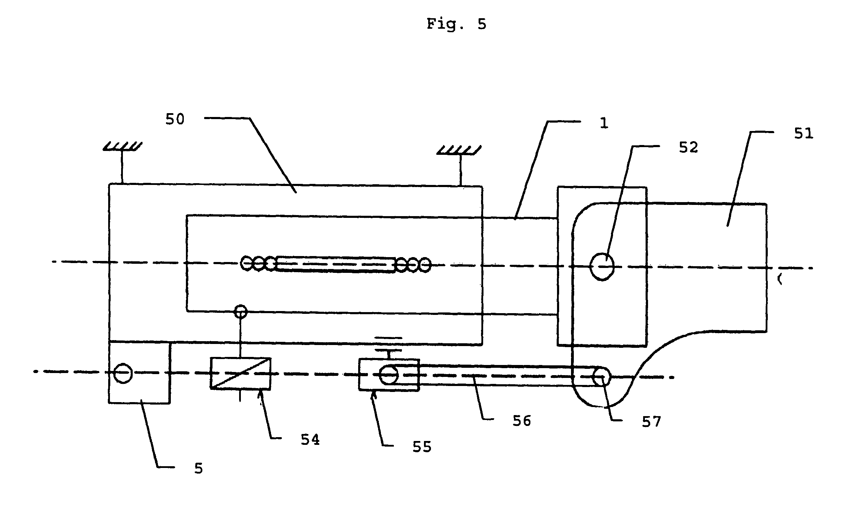

La figure 5 représente une vue schématique d'un exemple de module comportant des réglages axial et radial interdépendant avec un moteur, un embrayage et un écrou permanent. La colonne de direction (1) présente à son extrémité la plus proche du volant un pivot (52) permettant l'inclinaison d'une platine (51) qui comporte la partie supérieure de l'axe de la colonne de direction sur laquelle sera monté le volant. La colonne de direction (1) est coulissante axialement par rapport à un fourreau (50). Un moteur électrique unique (5) assure l'entraînement d'une vis avec laquelle coopèrent un premier élément de jonction (54) débrayable assurant le déplacement axial de la colonne de direction (1) par rapport au fourreau fixe (50), et un deuxième élément de jonction (55) en prise permanente par une liaison vis-écrou. Ce deuxième élément de jonction (55) actionne une bielle (56) coopérant avec la platine (51) par l'intermédiaire d'une articulation.

Comme dans les solutions précédentes, un capteur relatif unique est accouplé directement ou indirectement avec le moteur, pour délivrer des impulsions à un premier compteur de position axiale incrémenté ou décrémenté seulement lorsque l'élément de jonction (54) est embrayé et à un deuxième compteur de position incrémenté ou décrémenté en permanence.

Le premier compteur reçoit les impulsions provenant du capteur relatif, et est incrémenté ou décrémenté en fonction du signal de sens de rotation chaque fois que le moteur entraîne la vis (56) et que le premier élément de jonction (54) est dans l'état embrayé. L'état de ce premier compteur correspond à la position axiale de la colonne de direction.

Le deuxième compteur reçoit également les impulsions provenant du capteur relatif, et est incrémenté ou décrémenté en fonction du signal de sens de rotation chaque fois que le moteur entraîne la vis (56). La position angulaire de la colonne correspond à l'état de ce second compteur auquel on soustrait le premier compteur.

Comme dans les autres exemples, la réinitialisation des compteurs est effectuée à l'aide de détecteurs de position de référence.

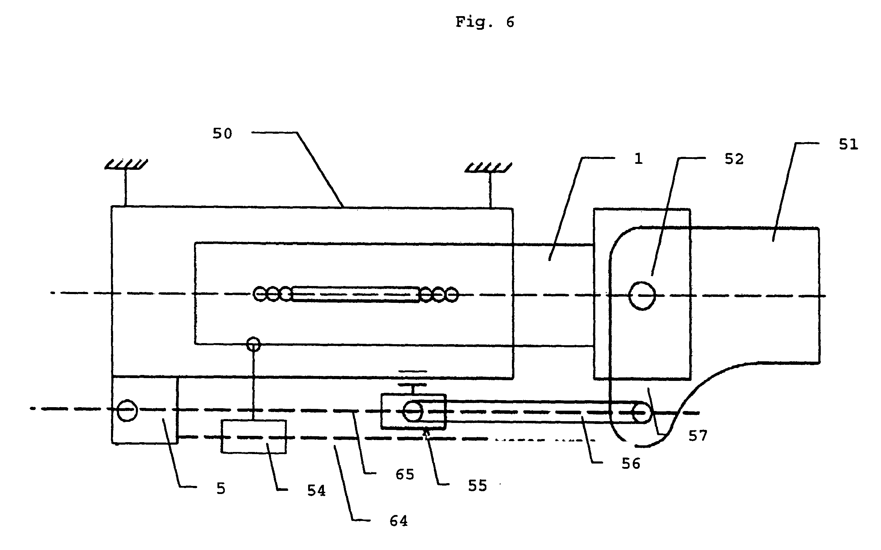

La figure 6 représente une vue schématique d'un deuxième exemple de module comportant des réglages axial et radial interdépendant avec un moteur à deux axes de sortie (soit seul l'axe (65) tourne pour le réglage radial, soit les deux tournent à la même vitesse pour le réglage axial). Cette version correspond à une réalisation mettant en oeuvre un moteur unique (5) entraînant deux axes de sortie (64, 65). Le premier axe (64) entraîne l'élément de jonction (54) assurant le déplacement axial de la colonne de direction (1). Le deuxième axe (65) entraîne l'élément de jonction (55) assurant l'orientation de la platine (51).

Le contrôleur associé à ces différents mécanismes présentant tous la caractéristique de comporter:
un moteur unique assurant à la fois le réglage en profondeur et le réglage en profondeur ou en orientation
un capteur relatif unique accouplé directement ou indirectement au moteur unique
soit un moyen de débrayage d'au moins un des éléments de jonction, soit un moyen de commutation de l'axe de sortie du moteur.
deux compteurs comptant le nombre d'impulsions délivrés par le capteur de position, en fonction d'information additionnelles sur le sens de rotation et l'état du ou des moyen(s) de débrayage ou de l'état du ou des axe(s) de sortie actif(s).
un ou plusieurs détecteurs de position des éléments de jonction, délivrant un signal de réinitialisation des compteurs.

Les compteurs peuvent délivrer soit une image respectivement de la position axiale et de la position radiale, soit respectivement une image de l'une de ses deux positions et une image de la combinaison des deux positions. Dans ce dernier cas, l'information correspondant à l'autre position est déterminée par soustraction entre le contenu des deux compteurs.

Les différents modes de comptage peuvent se présenter de la façon suivante.

Dans le cas de deux vis de sorties, l'un étant la vis "radiale" pour l'entraînement du moyen de jonction assurant le réglage en pivotement, et l'autre étant la vis "axiale" pour l'entraînement du moyen de jonction assurant le réglage en translation :
Soit le compteur "Axial" compte toutes les impulsions lorsque la vis "axiale" est active. Le deuxième compteur est un compteur "combiné" comptant toutes les impulsions, quelle que soit la vis engagée. L'information de position "radiale" est calculée par différence entre les deux compteurs.
Soit le compteur "Axial" compte toutes les impulsions lorsque la vis "axiale" est active. Le deuxième compteur est un compteur "radial" compte toutes les impulsions, lorsque la vis "axiale" n'est pas engagée.

Dans le cas d'une vis de sortie unique :
Soit le compteur "Axial" compte toutes les impulsions lorsque l'élément de jonction "axial" est embrayé. Le deuxième compteur est un compteur "combiné" comptant toutes les impulsions, quel que soit l'état de l'embrayage. L'information de position "radiale" est calculée par différence entre les deux compteurs.
Soit le compteur "Axial" compte toutes les impulsions lorsque l'élément de jonction "axial" est embrayé. Le deuxième compteur est un compteur "radial" compte toutes les impulsions, lorsque l'élément de jonction « axial » n'est pas embrayé.
Soit le compteur "Axial" compte toutes les impulsions lorsque l'élément de jonction "axial" est embrayé. Le deuxième compteur est un compteur "radial" compte toutes les impulsions, lorsque l'élément de jonction « radial » est embrayé.

## Revendications

1. Module de colonne de direction (1) à commande de positionnement motorisée comportant un moteur unique (5) de réglage de la position du volant selon un axe de pivotement transversal (4) pour le réglage de l'inclinaison du volant d'une part, et selon un axe longitudinal pour le réglage de la profondeur d'autre part, par l'intermédiaire respectivement d'un premier et d'un second éléments de jonction (7,8), ledit module comportant des moyens de commande de l'état des éléments de jonction permettant de sélectionner un des axes de réglage, ledit moteur unique (5) étant associé à un capteur de position incrémental unique délivrant une information de rotation dudit moteur à un contrôleur qui reçoit en outre au moins une information d'activation représentative de l'état de l'un au moins desdits éléments de jonction, ledit contrôleur comportant un système de comptage des impulsions délivrées par ledit capteur, ledit système de comptage comprenant un premier et un second compteurs sélectionnés en fonction de ladite au moins une information d'activation et correspondant respectivement à l'un et l'autre desdits axes de réglage, **caractérisé en ce que** ledit module comporte des détecteurs de position desdits éléments de jonction, lesdits détecteurs étant adaptés à délivrer un signal de réinitialisation des compteurs lorsque les éléments de jonction viennent dans des positions de référence.

2. Module de colonne de direction (1) selon la revendication 1, **caractérisé en ce que** chacun desdits éléments de jonction coopérent avec une vis filetée unique entraînée par ledit moteur unique (5), ledit module comportant des moyens de commande de l'embrayage de l'un au moins des éléments de jonction avec ladite vis filetée, lesdits moyens de commande délivrant ladite information d'activation correspondant à l'état desdits embrayages.

3. Module de colonne de direction (1) selon la revendication 2, **caractérisé en ce que** ledit capteur incrémental unique est constitué par une sonde à effet Hall ou un capteur magnétique ou optique ou inductif/capacitif, solidaire de l'axe du moteur, d'un élément de la transmission ou de l'axe de sortie.

4. Module de colonne de direction (1) selon l'une quelconque des revendications 2 à 3, **caractérisé en ce que** l'un des éléments de jonction est en prise permanente avec ladite vis entraînée par le moteur unique (5) et **en ce que** le contrôleur comporte un premier compteur de mémoire incrémenté en fonction des variations du capteur incrémental seulement lorsque l'embrayage du premier moyen de jonction est activé, et un deuxième compteur de mémoire incrémenté en fonction des variations dudit capteur incrémental.

5. Module de colonne de direction (1) selon l'une quelconque des revendications 2 à 3, **caractérisé en ce que** chacun des éléments de jonction est couplé par l'intermédiaire d'un embrayage avec ladite vis entraînée par le moteur unique (5) et **en ce que** le contrôleur comporte un premier compteur de mémoire incrémenté en fonction des variations du capteur incrémental lorsque l'embrayage du premier moyen de jonction est activé, et un deuxième compteur de mémoire incrémenté en fonction des variations dudit capteur incrémental lorsque l'embrayage du deuxième moyen de jonction est activé.

6. Module de colonne de direction (1) selon la revendication 1, **caractérisé en ce que** le moteur unique (5) comporte deux axes de sorties et un moyen de commutation sélectionnant l'un ou l'autre desdits axes ou les deux, l'un des éléments de jonction coopérant par une liaison vis-écrou avec l'un des axes de sortie pour entraîner le déplacement axial en translation de la colonne de direction (1) par rapport à la partie fixe du module, et l'autre des éléments de jonction coopérant par une liaison vis-écrou avec l'autre axe de sortie pour entraîner la rotation de la colonne de direction (1) par rapport à un axe de pivotement transversal de la colonne de direction (1) par rapport à la partie fixe du module, ledit moyen de commutation délivrant ladite information d'activation correspondant à l'état dudit moyen de commutation.

## Claims

1. Steering column module (1) with motorised position control comprising a single motor (5) for adjusting the position of the steering wheel according to a transverse pivoting axle (4) for adjusting the tilt of the steering wheel, on the one hand, and according to a longitudinal axle for adjusting the depth, on the other hand, by means respectively of first and second joining elements (7, 8), said module comprising means for controlling the status of the joining elements that make it possible to select one of the axles for adjustment, said single motor (5) being connected to a single incremental position sensor supplying rotation information of said motor to a controller that also receives at least one piece of activation information that represents that status of at least one of said linking elements, said controller comprising a system for counting the impulses supplied by said sensor, said counting system comprising first and second counters selected according to said at least one piece of activation information and each respectively corresponding to one of said axles of adjustment, **characterised in that** said module comprises position detectors of said linking elements, said detectors being adapted to supply a resetting signal to the counters when the linking elements come enter reference positions.

2. Steering column module (1) according to claim 1, **characterised in that** each one of said linking elements cooperates with a single screw powered by said single motor (5), said module comprising means for controlling the engagement of at least one of said linking means with said screw, said control means supplying said activation information corresponding to the status of said engagements.

3. Steering column module (1) according to claim 2, **characterised in that** said single incremental sensor consists of a Hall effect sensor or a magnetic, optical or inductive/capacitive sensor solidly attached to the axle of the motor, an element of the transmission or the output axle.

4. Steering column module (1) according to either one of the claims 2 or 3, **characterised in that** one of the linking elements is permanently engaged with said screw powered by the single motor (5) and **in that** the controller comprises a first memory counter incremented according to variations of the incremental sensor only when the engagement of the first linking means is activated, and a second memory counter incremented according to the variations of said incremental sensor.

5. Steering column module (1) according to either one of the claims 2 or 3, **characterised in that** each of the linking elements is interlocked by means of an engagement with said screw powered by the single motor (5) and **in that** the controller comprises a first memory counter incremented according to the variations of the incremental sensor when the engagement of the first linking means is activated, and a second memory counter incremented according to variations of said incremental sensor when the engagement of the second linking means is activated.

6. Steering column module (1) according to claim 1, **characterised in that** the single motor (5) comprises two output axles and switching means that select either one of said axles or both of them, one of the linking elements cooperating by means of a screw-nut connection with one of the output axles so as to power the axial translation movement of the steering column (1) in relation to the fixed part of the module, and the other linking element cooperating by means of a screw-nut connection with the other output axle so as to power the rotation of the steering column (1) in relation to a transverse pivoting axle of the steering column (1) in relation to the fixed part of the module, said switching means supplying said activation information corresponding to the status of said switching means.

## Patentansprüche

1. Lenksäulenmodul (1) mit motorbetriebener Positionssteuerung, das einen Einheitsmotor (5) zur Einstellung der Lenkradposition umfasst, wobei über jeweils ein erstes und ein zweites Verbindungselement (7) (8) in einer transversalen Schwenkachse (4) die Neigung des Lenkrads und in einer Längsachse die Tiefe eingestellt wird, wobei besagtes Modul Mittel zur Steuerung des Zustands der Verbindungselemente umfasst, die das Auswählen einer der Einstellachsen ermöglicht, wobei besagter Einheitsmotor (5) mit einem einheitlichen inkrementalen Positionssensor verbunden ist, der eine Information über die Drehung des besagtes Motors an einen Controller sendet, welcher ferner zumindest eine Aktivierungsinformation erhält, die repräsentativ für den Zustand von zumindest einem der besagten Verbindungselemente ist, wobei besagter Controller ein Zählsystem für die Impulse umfasst, die von besagtem Sensor ausgesendet werden, und besagtes Zählsystem einen ersten und einen zweiten Zähler umfasst, der entsprechend zumindest einer Aktivierungsinformation für jeweils eine der besagten Einstellachsen ausgewählt wird, **dadurch gekennzeichnet, dass** besagtes Modul Positionsdetektoren für besagte Verbindungselemente umfasst, die so angepasst wurden, dass sie ein Reinitialisierungssignal für die Zähler aussenden, wenn die Verbindungselemente in den Bezugspositionen stehen.

2. Lenksäulenmodul (1) nach Patentanspruch 1, **dadurch gekennzeichnet, dass** jedes Verbindungselement mit einer einheitlichen Gewindeschraube zusammenwirkt, die von besagtem Einheitsmotor (5) bewegt wird, wobei besagtes Modul Mittel zur Steuerung des Einkuppelns von zumindest einem der Verbindungselemente in besagte Gewindeschraube umfasst, und besagte Steuermittel besagte Aktivierungsinformation aussenden, die dem Zustand besagter Kupplungen entsprechen.

3. Lenksäulenmodul (1) nach Patentanspruch 2, **dadurch gekennzeichnet, dass** besagter einheitlicher Inkrementalsensor aus einer Hall-Sonde, einem magnetischen, optischen oder induktiven/kapazitiven Sensor besteht, der mit der Achse des Motors, einem Übertragungselement oder der Ausgangsachse verbunden ist.

4. Lenksäulenmodul (1) nach einem der Patentansprüche 2 bis 3, **dadurch gekennzeichnet, dass** eines der Verbindungselemente dauerhaft in besagte, vom Einheitsmotor (5) bewegte Gewindeschraube eingreift, und der Controller einen ersten Speicherzähler umfasst, dessen Einheiten sich entsprechend den Schwankungen des Inkrementalsensors nur dann erhöhen, wenn die Kupplung des ersten Verbindungsmittels aktiviert ist, und einen zweiten Speicherzähler, dessen Einheiten sich entsprechend den Schwankungen besagten Inkrementalsensors erhöhen.

5. Lenksäulenmodul (1) nach einem der Patentansprüche 2 bis 3, **dadurch gekennzeichnet, dass** jedes Verbindungselement durch eine Kupplung mit besagter, durch den Einheitsmotor (5) bewegten Schraube verbunden ist und der Controller einen ersten Speicherzähler umfasst, dessen Einheiten sich entsprechend den Schwankungen des Inkrementalsensors erhöhen, wenn die Kupplung des ersten Verbindungsmittels aktiviert ist, und einen zweiten Speicherzähler, dessen Einheiten sich entsprechend den Schwankungen des Inkrementalsensors erhöhen, wenn die Kupplung des zweiten Verbindungsmittels aktiviert ist.

6. Lenksäulenmodul (1) nach Patentanspruch 1, **dadurch gekennzeichnet, dass** der Einheitsmotor (5) zwei Ausgangsachsen und ein Schaltmittel zur Auswahl einer der besagten Achsen oder beider Achsen umfasst, wobei ein Verbindungsmittel über eine Schraube-Mutter-Verbindung mit einer der Ausgangsachsen zusammenwirkt, um die axiale Verschiebung der Lenksäule (1) in Bezug auf den feststehenden Teil des Moduls zu bewirken, und das andere Verbindungselement über eine Schraube-Mutter-Verbindung mit der anderen Ausgangsachse zusammenwirkt, um die Drehung der Lenksäule (1) in Bezug auf eine quer verlaufende Schwenkachse der Lenksäule (1) in Bezug auf den feststehenden Teil des Moduls herbeizuführen, wobei besagtes Schaltmittel besagte Aktivierungsinformation über den Zustand besagten Schaltmittels aussendet.
